# FASCICULE DE BREVET EUROPEEN

(11) **EP 2 473 294 B1**
(45) Date de publication et mention de la délivrance du brevet: **28.08.2013**
(21) Numéro de dépôt: 10752632.9
(22) Date de dépôt: 21.08.2010
(51) Int. Cl.: B02C 4/08, B03B 9/06, B07B 1/12, B07B 1/46, B07B 9/00, B02C 19/00

(54) **PROCÉDÉ ET INSTALLATION DE RECYCLAGE DE DÉCHETS DE PLÂTRE**
RECYCLING-VERFAHREN UND -ANLAGE FÜR GIPSABFALL
METHOD AND PLANT FOR RECYCLING PLASTER WASTE

(30) Priorité: 03.09.2009 FR 0956012
(43) Date de publication de la demande: 11.07.2012
(73) Titulaire: Nantet Locabennes, 73260 Petit Coeur (FR)
(72) Inventeur: NANTET, Gilles, F-73260 Aigueblanche (FR); HUBAUX, Paul, B-75000 Tournai (BE)
(74) Mandataire: Ocvirk, Philippe
(86) Numéro de dépôt international: PCT/IB2010/053774
(87) Numéro de publication internationale: WO 2011/027255

(56) Documents cités:
- EP-A2- 1 129 780
- WO-A1-92/00152
- WO-A1-2004/016355
- DE-A1-102005 053 092
- US-A- 5 100 063

## Description

La présente invention concerne un procédé et une installation de recyclage de déchets de plâtre. Les déchets de plâtre, surtout ceux issus de démolition de bâtiments, sont encore très souvent enfouis faute de pouvoir les recycler suffisamment facilement et correctement. Le nombre de centres d'enfouissements de tels déchets s'est cependant considérablement réduit au cours de ces vingt dernières années, et de plus les règlements en vigueur et les objectifs de développement durable rendent de plus en plus difficile l'ouverture de nouvelles décharges.

Par exemple, les mélanges de plâtre, eau et déchets organiques produisent des gaz sulfurés malodorants ; aussi la réglementation actuelle impose-t-elle l'enfouissement des déchets de plâtre dans des alvéoles spécifiques de classe F, dans des centres d'enfouissement techniques de classe III (CET de classe III). Il en résulte une forte augmentation du prix des redevances de décharges. En conséquence, les plateformes de tris sélectifs de déchets industriels banals (DIB) se sont multipliées, avec pour buts de séparer manuellement ou de façon automatisée les différents déchets et les regrouper par nature (papier, verre, bois, plastiques, etc.) afin de pouvoir les recycler, et limiter ainsi les volumes de déchets envoyés en décharges et le coût correspondant.

L'invention s'inscrit donc dans une démarche environnementale (préservation de la nature en réduisant les volumes de DIB enfouis) et de développement durable en séparant les composants en vue de leur réutilisation, soit comme matériaux recyclés ou matière première pour la fabrication de nouveaux produits, soit pour la fabrication de combustibles de substitution incinérables.

Il y a typiquement deux types de déchets de plâtre ou contenant du plâtre, spécifiquement visés par l'invention :
- les déchets issus notamment des usines de fabrication de plaques de plâtre, cartonnées ou non, ou des chantiers de travaux neufs en bâtiment, et qui ne comportent pas de complexe isolant ni autres matériaux divers ; on notera incidemment que le terme « carton » utilisé dans ce mémoire doit s'entendre de toute feuille de revêtement de plaque de plâtre, qu'elle soit en carton, papier, papier cartonné, etc.
- les déchets comportant des complexes isolants en polystyrène, laine minérale, et ceux qui sont issus des chantiers de démolitions et de déconstruction qui sont associés à des déchets d'autres matériaux : bois, céramiques, tissus, autres matériaux de construction, peinture, ossatures métalliques, métaux divers, câbles électriques et gaines, etc.

Les déchets du premier type, qui ne comportent que le plâtre associé ou non au carton, peuvent être relativement facilement recyclés après broyage dans les usines de fabrication de panneaux de plaques de plâtre. On connaît ainsi des machines de recyclage conçues à cette fin, et qui n'acceptent que ce type de déchets. Au cours du traitement, une partie majeure du carton est enlevée, et le carton restant est mélangé au gypse sous forme de fibres, dans des proportions suffisamment faibles, acceptables dans le procédé de fabrication de plaques de plâtre neuves. Pour pouvoir être ainsi recyclés, les déchets doivent subir un tri sélectif soigné et donc coûteux. Seuls les déchets ne contenant que du plâtre, avec ou sans carton, peuvent être traités, ce qui laisse plus de 50 % des déchets contenant du plâtre qui, parce qu'ils comportent ou sont susceptibles de comporter aussi d'autres matériaux, doivent être enfouis dans des CET de classe III.

Il n'y a pas actuellement sur le marché de machines permettant un traitement à échelle industrielle des déchets du second type, permettant un recyclage important des composants de ces déchets, et donc une diminution sensible des mises en décharge dans des CET de classe III.

On connaît déjà dans la littérature technique des procédés et des machines visant à traiter des déchets de plaques de plâtre.

Il a ainsi été déjà proposé, par exemple par US4801101 ou DE20004472, de déchiqueter et/ou broyer lesdits déchets au moyen de déchiqueteurs (appelés shredder) et broyeurs de différents types. Mais un inconvénient est que les morceaux ainsi déchiquetés et broyés soit sont de faible dimension et comportent à la fois du plâtre et des restes de carton qui y adhère, et il est alors difficile d'effectuer un tri efficace entre le plâtre et le carton, soit ils sont de plus grande dimension et alors le carton reste adhérent sur le plâtre. Ces procédés ne sont applicables que pour le recyclage de déchets de plâtre cartonnés non liés à d'autres matériaux. Ils produisent des gypses recyclés très chargés en carton et ne sont utilisables qu'à la condition que l'usine de fabrication de panneaux de plâtre puisse accepter ce gypse recyclé et chargé en carton dans son process.

Le procédé décrit dans le document US5100063 vise notamment à résoudre le problème de la séparation de l'extraction d'une partie au moins du carton. Ce document décrit un procédé de traitement des chutes ou déchets de plaques de plâtre consistant à écraser les dites chutes individuellement en les faisant passer entre des cylindres contrarotatifs. Il en résulte que le plâtre est réduits en poudre ou petits fragments qui se séparent ainsi des feuilles cartonnées formant les faces desdites plaques de plâtre. Il est alors aisé de séparer le plâtre des feuilles de carton. Mais ce procédé nécessite de passer chaque chute ou déchet de plaque individuellement entre les cylindres d'écrasement et en conséquence ne peut s'appliquer qu'aux chutes ou déchets de plaques de plâtre restés en relativement bon état et ne comportant pas d'autres déchets adhérents auxdites plaques.

Le document EP0073864 vise aussi à faciliter la séparation entre carton et plâtre par l'utilisation d'un broyeur à marteaux à axe vertical. Ce broyeur est supposé réduire le plâtre en particules fines, tout en conservant le carton sous forme de pièces de plus grandes dimensions, la séparation pouvant ainsi être effectuée par tamisage. En pratique ce procédé ne fonctionne aussi que pour le recyclage des chutes de fabrication en usine.

Le document US US5593096 décrit un procédé similaire utilisant un broyeur à marteaux tournant dans une enveloppe percée constituant une grille à travers les trous de laquelle le plâtre et le papier sont supposés passer en étant réduit à des dimensions permettant leur séparation ultérieure par tamisage. Mais là encore, ce procédé n'est applicable que pour le recyclage de déchets de plâtre cartonnés non liés à d'autres matériaux.

EP1490182 décrit un perfectionnement au document cité précédemment, selon lequel une séparation complémentaire est effectuée avant de faire passer les déchets de plaques de plâtre dans le broyeur, pour enlever les déchets métalliques par séparation magnétique, et enlever manuellement les autres déchets tels que bois ou matières plastiques.

EP1421995 décrit un procédé de traitement des déchets de plaques de plâtre dans lequel les déchets sont en premier lieu réduits en fragments de 4 à 5 cm dans toutes les directions par un cylindre pourvu de couteaux ou de pointes et tournant à faible vitesse, ou un broyeur à marteau ou des rouleaux rappeurs. Ce ou ces cylindres sont placés dans une trémie et un poussoir est prévu pour forcer les déchets au contact des cylindres. Les fragments ainsi découpés grossièrement passent ensuite entre deux cylindres pourvus de rainures et cannelures longitudinales, entraînés à des vitesses différentes de manière à créer des contraintes de tension dans le plâtre, propres à le désagréger. Puis les débris sont séparés dans un tambour percé entraîné en rotation. L'installation peut de plus comporter des séparateurs magnétiques, des moyens de chauffage pour sécher les déchets de plâtre.

Ce dernier procédé tend à permettre le traitement de déchets de plaques de plâtre comportant aussi d'autres déchets de construction en faible proportion, notamment des déchets métalliques. Mais, mis à part les métaux ferreux, ce procédé ne prévoit pas de traitement ni d'exutoire pour d'autres composants des déchets tels qu'isolants polystyrène et laine minérale, bois, céramique, gaines et câbles électriques, etc. De plus, n'étant pas doté de système de décolmatage, il est également inadéquat pour le recyclage de déchets de plâtre humides, même légèrement. Un autre procédé connu est décrit dans WO 2004/016355.

Aucun des procédés connus ou décrits précédemment ne vise et ne permet le traitement de déchets de plaques de plâtre comportant, en plus des feuilles de carton, une couche d'isolant tels que polystyrène expansé ou produit fibreux d'isolation thermique, ainsi que d'autres composants tels que céramique, habillage bois (lambris, plinthes), gaines et câbles électriques, tissus, toiles armées, etc.

La présente invention a pour but de proposer un nouveau procédé et une nouvelle installation pour le traitement et le recyclage de déchets de plâtre.

Elle vise particulièrement à permettre de traiter tous les déchets de plâtre issus des chantiers de construction, de déconstruction et de démolition, y compris les panneaux de plâtre associés à des complexes isolants ou décoratifs. Elle vise aussi à supprimer les opérations de tri manuel. Elle vise encore à permettre de traiter des déchets légèrement humides. Elle vise enfin à isoler les autres composants dans le but de les recycler : le papier, le polystyrène expansé, les laines minérales, les métaux, bois, céramiques, etc. Il est à noter que le gypse représente 80 à 90 % de la masse des déchets ; l'invention vise à permettre de récupérer 90 à 95 % de ce gypse. Ainsi, même si les autres composants des déchets de plâtre ne pouvaient être recyclés, seulement de 15 à 20% de la masse des déchets seraient finalement acheminés vers une filière de recyclage spécifique (matière ou énergétique) soit, en dernière extrémité, enfouis en CET de classe III.

Avec les objectifs mentionnés ci-dessus en vue, l'invention a pour objet un procédé de recyclage de déchets de plâtre, comportant notamment des déchets de plaques de plâtre cartonnées, avec ou sans complexe isolant, associés à d'autres déchets tels que métaux, bois, céramiques, gaines et câbles électriques, etc.

Selon l'invention, ce procédé est caractérisé en ce qu'il comporte plusieurs étapes de fragmentation et libération, au cours desquelles les déchets sont progressivement déstructurés pour notamment désolidariser le plâtre des feuilles de cartons et éventuellement autres matériaux adhérent au plâtre, et plusieurs étapes de séparation et purification dans lesquelles les composants désolidarisés sont séparés les uns des autres par des cribles passant des granulométries de plus en plus fines, les étapes de fragmentation et libération comportant notamment une première et une deuxième étape de broyage, la première étape de broyage soumettant les déchets à un écrasement contrôlé simultané à des flexions en faisant passer les déchets dans un premier broyeur à cylindres qui est un broyeur à cylindres dentés comportant deux cylindres dentés comprenant une succession axiale de gorges et de nervures annulaires, les nervures annulaires d'un cylindre étant en correspondance avec les gorges de l'autre cylindre, et l'écartement entre les cylindres dentés étant déterminé de manière que les déchets issus de cette étape de broyage se présentent sous forme d'éléments aplatis d'épaisseur prédéterminée pour passer entre des cylindres d'un deuxième broyeur à cylindres lors de la deuxième étape de broyage.

Par l'expression « cylindres dentés », il doit être compris des cylindres dont la surface présente dans la direction axiale une succession de nervures annulaires séparées par des gorges annulaires, les nervures ayant, vues selon une section axiale du cylindre, une forme générale sensiblement triangulaire avec un sommet arrondi ou épointé, ou une forme sensiblement sinusoïdale. Il ne s'agit donc pas de cylindres sur la surface desquels seraient formées ou implantées des dents distinctes ayant chacune pour fonction de couper ou déchiqueter le matériau, à la manière des cylindres pourvus de dents individuelles tels qu'utilisés par exemple dans des installations de déchiquetage, appelées couramment « shredders », ou similaires.

Des installations utilisant des cylindres dentés du type général de ceux qui sont utilisés par l'invention sont déjà connues, mais soit pour provoquer un cisaillement des matériaux traités par les sommets, ou arêtes, des nervures, soit, notamment en traitement de produits végétaux granulaires, pour broyer et pulvériser ces matériaux entre les flans se faisant face des nervures triangulaires des deux cylindres.

Les inventeurs ont découvert que, moyennant d'adapter le profil des nervures et gorges, par exemple par des arrondis adéquats, pour éviter l'effet de cisaillement, et aussi de contrôler l'écartement des cylindres pour ne pas avoir un écrasement excessif, l'utilisation de ces broyeurs à cylindres permet de déstructurer les déchets, en combinant :
- un début d'écrasement propre d'une part à limiter l'épaisseur globale de l'ensemble des déchets traités, et d'autre part à commencer une désagrégation du plâtre entre les feuilles de carton, mais sans pour autant le pulvériser ou l'amener à une granulométrie trop petite qui pourrait entraîner un colmatage rapide de l'installation, surtout en présence d'humidité, avec
- des flexions générées au niveau de l'interface entre les sommets des nervures d'un des cylindres et le fond des gorges de l'autre cylindre, ces flexions ayant aussi un effet de désagrégation du plâtre et provoquant en plus un effet de cisaillement du plâtre dans le plan des panneaux, propre à désolidariser les feuilles de carton.

On joue en fait sur les coefficients de flexibilité et d'élasticité qui sont très différents entre le plâtre, très peu flexible et élastique, et le papier carton qui forme les parois des plaques de plâtre, et qui est lui fortement flexible et plus élastique que le plâtre, et qui donc accepte les déformations subies lors du passage entre les cylindres dentés, alors que ces déformations désagrègent le plâtre sur lequel les feuilles de carton sont collées.

De plus, lors du passage des déchets entre les cylindres, les formes non tranchantes des arêtes des nervures annulaires permettent de ne pas cisailler les matériaux, et donc permettent de conserver les matériaux autres que le plâtre, notamment le carton mais aussi les matériaux isolants ou autres déchets, sous formes de déchets de plus grandes dimensions, dont la séparation ultérieure est de ce fait facilitée. Les dents ont donc, de manière générale, un profil de forme adaptée, par exemple en sinusoïde ou similaire, pour que les nervures et les gorges s'emboîtent les unes dans les autres mais de manière à limiter au mieux les effets de cisaillement, poinçonnage ou déchirement des éléments les plus flexibles (papier, carton, polystyrène, laine minérale, papiers peints, tissus, etc.) contenus dans les déchets.

Pour faciliter l'entraînement des déchets entre les cylindres, les nervures annulaires comportent préférentiellement des encoches réparties circonférentiellement. Ces encoches séparent donc les arêtes de chaque nervure en plusieurs éléments, mais ces éléments, bien que présentant de ce fait des sommets séparés, ne constituent pas des dents séparées propres à déchiqueter les matériaux mais uniquement des reliefs d'entraînement des déchets. La forme desdites encoches est déterminée de manière à optimiser l'effet d'entraînement et minimiser les effets de découpe ou déchiquetage.

Selon une disposition complémentaire préférentielle, le procédé selon l'invention comporte entre les deux étapes de broyage, une étape de criblage par un premier crible qui est préférentiellement un crible à barreaux agencé pour extraire des déchets issus du premier broyeur à cylindres des déchets de grande dimension tels que larges morceaux de carton, morceaux d'isolant polystyrène ou laine de verre ou laine minérale, qui se sont désolidarisés lors du passage dans le premier broyeur, ou encore morceaux de bois, de tissus etc. Un tel crible à barreaux permet d'éviter les colmatages qui se produisent dans d'autres types de cribles, dûs à la forme d'une partie des déchets traités, tels que notamment des morceaux de carton en forme de languettes qui obturent les cribles à mailles ou à trous. Ce type de crible est aussi plus efficace dans le cas de traitement de déchets humides. Les refus de ce crible sont quasiment exempts de plâtre.

Ce crible à barreaux pourra préférentiellement être un crible vibrant, ou aussi remplacé par un crible trommel ou à cylindre rotatif. Typiquement, les dimensions des refus de ce crible sont de l'ordre de 35 mm et plus.

Selon une autre disposition complémentaire préférentielle, le deuxième broyeur à cylindres est un broyeur à cylindres cannelés, dont les cylindres cannelés comportent des cannelures et rainures sensiblement parallèles à l'axe de rotation et réparties circonférentiellement, et sont agencés de manière que les déchets entrant issus du premier broyage et passant dans le crible à barreau précité, suivi ou non d'un premier criblage, soient soumis notamment à des chocs générés par les cannelures simultanément à des flexions et compressions propres à libérer le plâtre des autres composants, en particulier des feuilles de carton qui y étaient encore adhérents.

Selon encore une autre disposition complémentaire, les deux broyeurs à cylindres comportent un système de sécurité permettant l'écartement des cylindres, en cas de passage d'un élément non broyable contenu dans les produits d'alimentation. A cette fin, l'un des cylindres est par exemple monté sur une poutre pivotante, articulée sur une rotule horizontale et des ressorts tarés permettent un écartement contrôlé des cylindres par pivotement de cette poutre, dans le cas où un effort d'écartement provoqué par la matière traitée deviendrait supérieur à un seuil prédéfini par les ressorts tarés.

Préférentiellement aussi, le premier et/ou le deuxième broyeur à cylindres comportent un système de décolmatage automatique, qui permet notamment de traiter des déchets de plâtre humides. Ces systèmes de décolmatage pourront être de différents types : des brosses métalliques appliquées manuellement ou par contrepoids, de façon continue ou discontinue sur la surface des cylindres, ou encore en forme de peigne métallique épousant la forme des dents, nervures et gorges.

Selon une autre disposition préférentielle, le procédé comprend au moins deux étapes de séparation magnétique, respectivement en amont du premier broyeur, et en aval du second broyeur, typiquement réalisées par des dispositifs de séparation magnétique de type « overband » disposés au-dessus de bandes transporteuses utilisées pour transporter les déchets d'un poste de traitement au suivant. La première étape de séparation magnétique, en amont du premier broyeur, permet d'extraire les éléments ferreux les plus massifs susceptibles de perturber le bon fonctionnement du premier broyeur. La seconde étape de séparation magnétique permet d'extraire les matériaux métalliques ferreux de plus petites dimensions, tels qu'agrafes, vis, clous, etc, libérés lors du passage dans les broyeurs. Une étape supplémentaire de séparation magnétique pourrait aussi être effectuée entre les deux étapes de broyage.

Les étapes de séparation et purification peuvent notamment comporter :
- une ou plusieurs étapes de séparation par cribles vibrant à barreaux,
- une ou plusieurs étapes de séparation par cribles vibrant à tôle perforée,
- une ou plusieurs étapes de séparation par cribles vibrant à mailles carrées.

Selon une disposition particulière, une ou plusieurs des étapes de séparation peuvent être associées à une étape d'aspiration pour séparer les éléments les plus légers des éléments plus lourds et éventuellement à une étape de séparation magnétique complémentaire.

Typiquement, outre la première séparation effectuée entre les deux étapes de broyage, les étapes de séparation comprennent préférentiellement, successivement après le deuxième broyage :
- une deuxième étape de séparation, par un crible vibrant à barreaux, typiquement avec des barreaux espacés d'environ 25 mm pour extraire des déchets sans plâtre de dimensions supérieures à cet espacement. Un crible à barreaux est aussi utilisé dans cette étape pour éviter le colmatage du crible, pour les mêmes raisons que celles exprimées ci-dessus. Les refus de ce crible sont exempts de plâtre.
- une troisième étape de séparation, par exemple par un crible vibrant à tôle perforée, typiquement avec des trous de diamètre de 20 mm environ, pour éviter le colmatage du crible. A ce stade, la forme d'une partie des déchets n'autorise toujours pas l'utilisation d'un crible à mailles carrées. Les refus de ce crible sont encore exempts de plâtre.
- une quatrième étape de séparation, également par un crible vibrant à tôle perforée, typiquement avec des trous de diamètre de 8 mm environ, associé à un système d'aspiration pour extraire des refus de ce crible les éléments les plus légers tels que carton, polystyrène, ou laine minérale, etc., les éléments les plus lourds, composés essentiellement de plâtre, n'étant pas aspirés,
- une cinquième étape de séparation, par un crible vibrant à mailles carrées, typiquement de 2 mm, également associé à un système d'aspiration pour extraire des refus de ce crible les éléments les plus légers tels que carton, polystyrène, ou laine minérale, etc., les éléments les plus lourds, composés essentiellement de plâtre, n'étant pas aspirés,
- une sixième étape, finale, de séparation par un tamis rotatif vibrant pour extraire les fines particules de laine minérale, ou des traces de billes de polystyrène cassées, etc., le matériaux passant étant alors constitué uniquement de gypse pulvérulent ou en grains de très petites dimensions.

L'invention a aussi pour objet une installation de recyclage de déchets de plâtre, comprenant notamment des déchets de plaques de plâtre cartonnées, avec ou sans complexe isolant, associés à d'autres déchets tels que métaux, bois, céramiques, gaines et câbles électriques, etc., qui se caractérise par le fait qu'elle comporte
- un premier broyeur à cylindres qui est un broyeur à cylindres dentés comportant deux cylindres dentés comprenant une succession axiale de gorges et de nervures annulaires, les nervures annulaires d'un cylindre étant en correspondance avec les gorges de l'autre cylindre, et l'écartement entre les cylindres dentés étant ajustable,
- un deuxième broyeur à cylindres qui est un broyeur à cylindres cannelés, dont les cylindres cannelés comportent des cannelures et rainures sensiblement parallèles à l'axe de rotation et réparties circonférentiellement.

Selon des dispositions complémentaires préférentielles, l'installation peut aussi comporter :
- une trémie de stockage, alimentée par un chargeur à godet cribleur,
- des systèmes de décolmatage automatique équipant les broyeurs,
- un crible à barreaux situé entre les deux broyeurs et agencé pour extraire des déchets issus du premier broyeur à cylindres des déchets de grande dimension,
- des séparateurs magnétiques situés notamment en amont du premier broyeur et en aval du deuxième broyeur
- un ensemble de cribles passant des granulométrie de plus en plus petites, et comportant successivement, en aval du deuxième broyeur, un crible à barreaux vibrant, un crible vibrant à tôle perforé, un second crible vibrant à tôle perforée associé à un système de séparation par aspiration, un crible vibrant à mailles carrées, également associé à un système d'aspiration, un tamis rotatif vibrant.

D'autres caractéristiques et avantages apparaîtront dans la description qui va être faite d'un procédé et d'une installation de recyclage conforme à l'invention.

On se reportera aux dessins annexés dans lesquels :
- la figure 1 est une représentation schématique de l'installation et des différentes étapes du procédé ,
- la figure 2 est une représentation simplifiée des cylindres dentés du premier broyeur à cylindres, montrant l'imbrication des dents des deux cylindres,
- la figure 3 est une vue selon la flèche F de la figure 2, montrant les encoches d'entraînement formées dans les nervures des cylindres,
- la figure 4 illustre, à échelle agrandie, les déformations de flexion des déchets de plaques de plâtre lors de leur passage entre les cylindres dentés.
- la figure 5 illustre la forme des cannelures du cylindre cannelé.

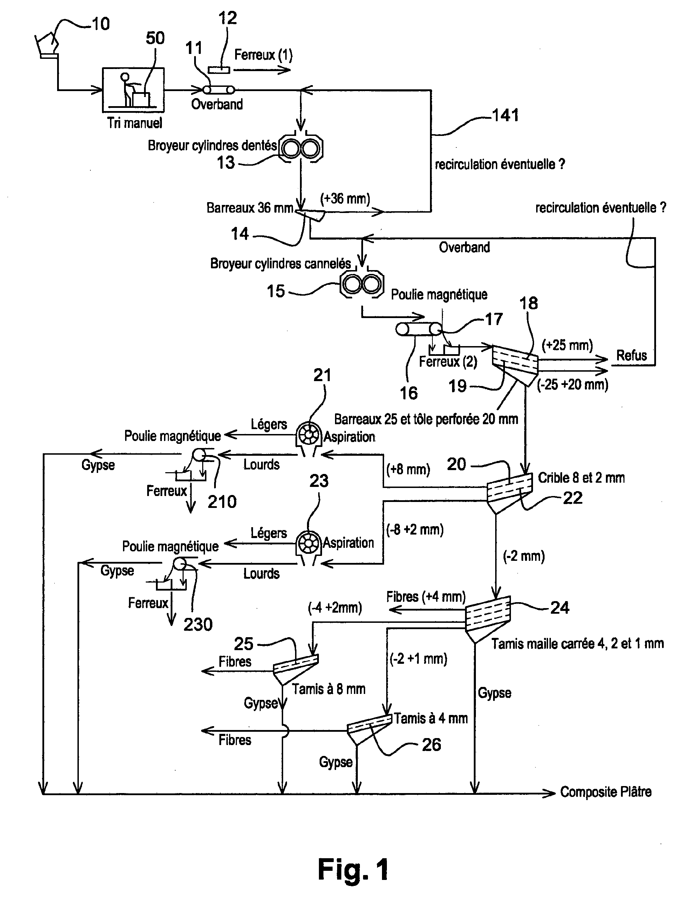

L'installation représentée sur la figure 1 comprend une trémie d'alimentation 10 alimentée par une chargeuse à godet cribleur à partir d'une plateforme sur laquelle les bennes de collecte remplies de déchets à traiter sont vidées. La chargeuse à godet cribleur reprend les déchets pour les introduire dans la trémie 10 et effectue simultanément un pré-broyage des déchets pour leur donner une granulométrie de l'ordre de 0 à 300 mm, acceptable pour leur introduction dans le premier broyeur 13.

Une table de tri manuel 50 peut être placée en aval de la trémie, permettant de retirer manuellement les composants de déchets manifestement incompatibles avec la poursuite du procédé, tels que barres de fer ou morceaux de bois de trop grandes dimensions, ou qui risquent de polluer les produits finaux.

Un premier transporteur, par exemple une bande transporteuse 11, assure le transport des déchets jusqu'au premier broyeur à cylindres 13. Un dispositif de séparation magnétique 12 est placé au-dessus de la bande transporteuse 11, pour extraire les éléments ferreux les plus massifs (Ferreux (1)).

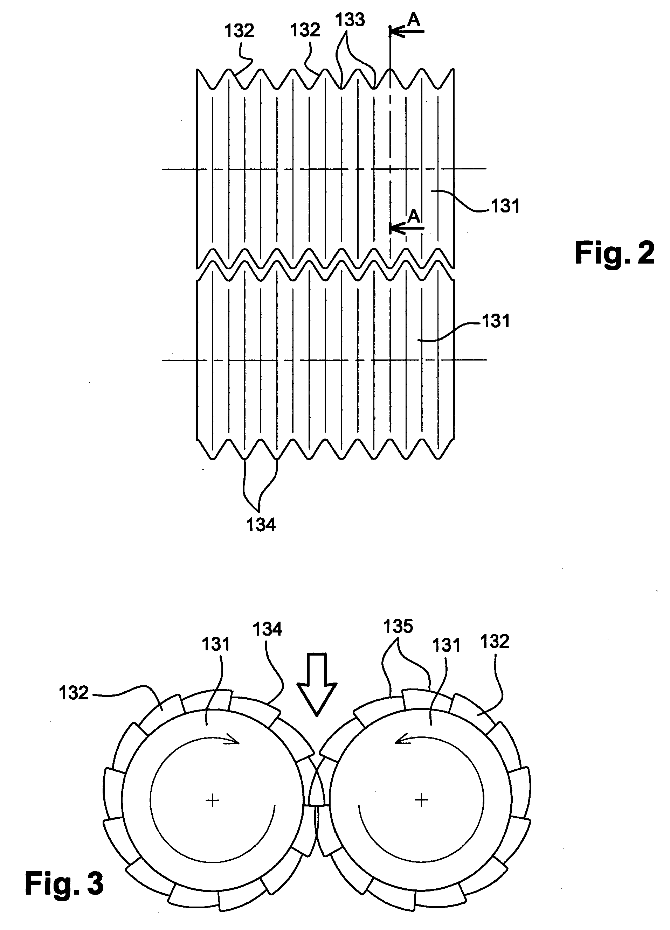

Le premier broyeur à cylindres 13 comporte deux cylindres dentés 131 contrarotatifs dont l'espacement est ajustable. Comme illustré figures 2 et 3, chaque cylindre comporte une succession axiale de nervures 132 et gorges 133 annulaires, les nervures 132 d'un cylindre étant situées en face des gorges 133 de l'autre cylindre et s'imbriquant entre elles. Les nervures ont une section de forme générale triangulaire, ou sinusoïdale, avec un sommet 134 arrondi pour ne pas être tranchant. Par ailleurs, elles comportent des encoches 135, représentées figure 3, réparties circonférentiellement, pour faciliter l'entraînement des déchets.

A titre d'exemple non-limitatif, les cylindres dentés ont un diamètre moyen de l'ordre de 300 à 600 mm et une largeur d'environ 450 mm, les dentures des cylindres dentés ont une profondeur de l'ordre de 20 à 40 mm et un pas de 20 à 60 mm, les encoches ont une profondeur de 10 à 20 mm. Les cylindres sont entraînés à une vitesse linéaire de 3,6 m/s. Bien entendu, ces valeurs ne sont indiquées qu'à titre d'exemple et dépendront notamment de la capacité de traitement souhaitée pour l'installation. Le broyeur à cylindres dentés utilisé par les inventeurs pour effectuer les essais est de type ALC 300/400 de la société «Ateliers Louis Carton».

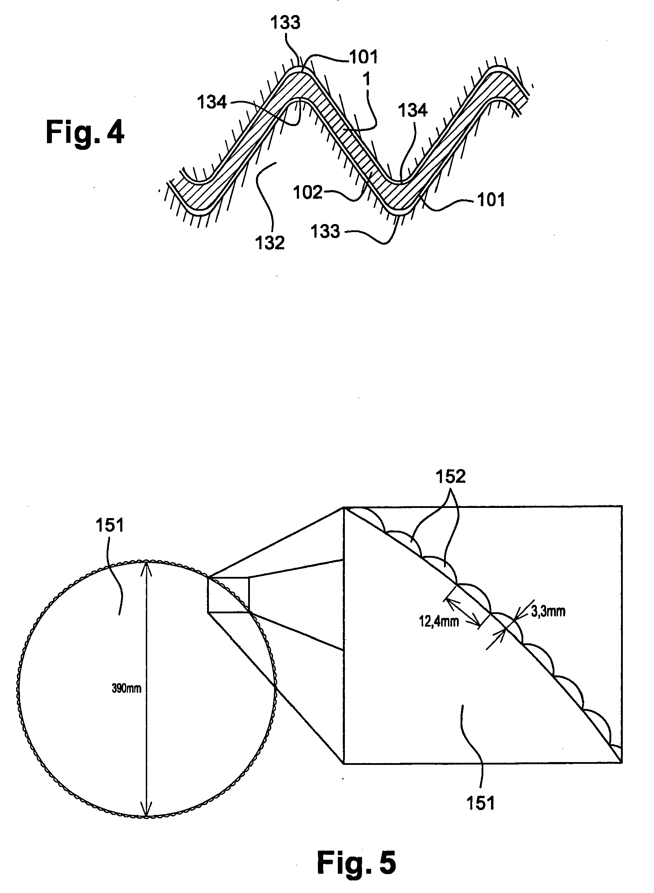

La figure 4 illustre les déformations subies par les déchets de plaque de plâtre 1 lors de leur passage entre les cylindres 131. On comprendra aisément par exemple que dans les zones situées entre les sommets 134 des nervures 132 et les fonds des gorges 133, les feuilles de carton 101 situées sur les faces des plaques de plâtre pourront fléchir sans difficulté, mais le plâtre 102 situé entre ces feuilles sera obligatoirement fragmenté.

Le premier broyeur 13 a notamment pour fonction d'assurer un écrasement contrôlé des déchets et ainsi réaliser une part de la phase de libération du gypse par rapport à ses supports en carton ou autre matériau qui y adhérent, comme déjà expliqué précédemment, et de calibrer les déchets en épaisseur pour faciliter leur introduction dans le second broyeur 15 ;

Il comporte préférentiellement un système de décolmatage automatique, par exemple de type à peigne ou à brosse métallique.

Les essais effectués montrent que ce premier broyage permet de réduire la proportion en masse des déchets de plus de 16 mm, de près de 40 % à moins de 10 % ; la proportion de déchets de moins de 2 mm passant de 14 % à près de 40%.

Les déchets issus du premier broyeur 13 sont dirigés sur un crible à barreaux 14, préférentiellement vibrant, dont les barreaux sont par exemples espacés de 36 mm. Un tel crible, aussi appelé couramment « scalpeur », permet d'éviter les problèmes de colmatage grâce à la disposition typique des barreaux orientés parallèlement et inclinés, cette inclinaison permettant aux matériaux retenus sur les barreaux de glisser sur ceux-ci grâce à leur inclinaison, et ainsi d'être évacués hors de la trajectoire des déchets, évitant ainsi les risques de colmatage par accumulation des dits matériaux retenus.

Ce crible, situé entre les deux broyeurs, a pour fonction d'extraire les plus gros éléments plats, principalement du papier, qui n'ont pu être calibrés en épaisseur par le premier broyeur, ainsi que d'autres éléments tels que bois, briques, ciments, etc. Les éléments les plus volumineux, papiers et cartons désolidarisés du plâtre sont ainsi extraits. Le crible à barreaux vibrant 14 pourra aussi être remplacé par un crible trommel ou à cylindre rotatif.

Dans les essais effectués, la fraction de déchets représentée par les refus du crible 14 représentait 6,5% en masse de l'échantillon de départ. Elle était essentiellement composée de papier, à plus de 90 %, le reste étant du bois, des matériaux divers et du plâtre pour environ 8,6 %, ce plâtre ne représentant toutefois que 0,7 % de la quantité totale de plâtre de l'échantillon de test. Les refus de ce crible peuvent optionnellement être recirculés vers l'entrée du broyeur 13, comme illustré par la boucle de re-circulation 141, permettant de réduire encore la teneur en plâtre des refus du crible.

Les déchets passant le crible 14 sont introduits dans le deuxième broyeur à cylindres 15 dont les cylindres 151 sont cannelés, comme illustré figure 5.

A titre d'exemple non limitatif, et dépendant notamment des capacités de traitement souhaitées, les cylindres cannelés ont un diamètre de 300 à 600 mm pour une largeur de 500 mm ; ils sont espacés d'environ 5 mm, et entraînés à une vitesse linéaire de 6 à 10 m/s. Les cannelures 152 des cylindres cannelés 151 s'étendent parallèlement à l'axe et ont typiquement une hauteur de quelques millimètres et un pas de 10 à 15 mm. Le broyeur à cylindres cannelés utilisé par les inventeurs pour effectuer les essais est de type ALC 350/500 de la société «Ateliers Louis Carton».

Les essais effectués montrent que, après ce second broyage, et donc à l'issue des phases de fragmentation et de libération, la proportion en masse des déchets de plus de 8 mm est de moins de 6 % ; la proportion de déchets de moins de 1 mm passant à plus de 50%, et près de 85 % ayant une granulométrie inférieure à 4 mm.

Les déchets sortant du deuxième broyeur 15 sont dirigés par un transporteur 16 vers un crible à deux étages en étant soumis au passage à une seconde séparation magnétique par un séparateur magnétique 17, tel qu'une une poulie magnétique ou un aimant permanent fixe disposé à proximité du flux de matières traitées.

Une trémie tampon peut être placée en amont du deuxième crible, pour assurer un stock tampon et une régulation des débits de déchets vers l'ensemble de cribles constituant les moyens de réalisation de la phase de séparation.

Le crible à deux étages, par exemple de type « CRIBLA » est composé d'un deuxième crible à barreaux 18 surmontant un crible à tôle perforée 19, tous deux inclinés avec une pente d'environ 10 %.

Le deuxième crible à barreaux 18 a des barreaux espacés par exemple de 25 mm, agencés de manière à éviter le colmatage. Les passants du deuxième crible à barreaux 18 sont directement amenés sur le crible à tôle perforée 19 qui peut être vibrant, associé au crible 18. Les trous de ce crible 19 ont un diamètre typiquement d'environ 20 mm. Les refus du crible à deux étages, c'est-à-dire les composants de granulométrie supérieure à 25 mm issu du deuxième crible à barreaux 18 et ceux de 20 à 25 mm issu du crible à tôle perforée 19, sont composés essentiellement de papier, pour environ 70 à 85 %, de polystyrène et d'un peu de laine minérale. Ils seront évacués vers une zone de stockage pour être soit transformés en combustibles de substitution, soit séparés pour pouvoir être recyclés.

Une recirculation au moins partielle de ces refus peut aussi être effectuée vers l'entrée du second broyeur 15 par un circuit de recirculation 151.

Les passants, c'est-à-dire les éléments lourds de moins de 20 mm passant à travers le crible 19, sont transférés vers un deuxième crible à deux étages composé d'un crible vibrant à tôle perforée 20, dont les trous ont un diamètre d'environ 8 mm, surmontant un crible vibrant 22 à maille carrées de 2 mm.

Les fractions granulométriques issues de ce crible à deux étages sont de 50 à 55 % pour les granulométries inférieures à 2 mm, environ 40 % pour les éléments de granulométrie 2 à 8 mm, et moins de 6 % pour ceux de 8 à 20 mm.

Les refus du crible à tôle perforée 20, composants de granulométrie supérieure à 8 mm, sont composés en majeure partie de granulés de plâtre, pour environ 70 %, de billes de polystyrène et d'autres matériaux en faibles quantités (papier, laine minérale, céramique, bois, etc.). Ils sont transférés vers un premier système d'aspiration 21.

Les passants du crible 20, soit environ 95 % des entrants, sont directement amenés sur le crible vibrant 22 à mailles carrées. Les refus, composants de granulométrie supérieure à 2 mm, sont aussi composés de granulés de plâtre pour plus de 85 %, de billes de polystyrène et d'autres matériaux en faibles quantités (papier, laine minérale, bois, etc.). Ils sont transférés vers un second système d'aspiration 23.

Les deux systèmes d'aspiration 21 et 23 permettent d'épurer les refus du crible à deux étages 20, 22 en séparant les éléments lourds, essentiellement des granulés de plâtre, des éléments légers. Chaque système d'aspiration comprend une table vibrante pour répartir uniformément les refus des cribles 20 et 22 sur toute la largeur de la table, les vibrations ayant également pour effet de placer les éléments les plus légers en partie supérieure. Un système d'aspiration réglable permet d'aspirer les éléments les plus légers, billes de polystyrène, papier, etc. qui sont évacués vers une zone de stockage pour être soit transformés en combustibles de substitution, soit séparés pour pouvoir être recyclés. Les éléments les plus lourds constitués par le plâtre sont transférés vers un silo de stockage, en passant éventuellement par des séparateurs magnétiques complémentaires 210, 230.

Les passants du crible 22 sont transférés vers un tamis vibrant rotatif 24 à trois étages, ayant par exemple respectivement des coupures à 4, 2, et 1 mm. Ce tamis vibrant a pour fonction d'extraire les fibres de laine minérale ainsi que les morceaux de billes de polystyrène cassées qui restent incluses dans les passants du crible à mailles carrées de 2 mm décrit ci-dessus. En masse, ces composants représentent un pourcentage infime et il peut rester utile de les extraire du gypse à recycler.

Le mouvement rotatif du tamis rotatif 24 a pour effet d'agglomérer les fibres de laine minérale en pelote. Le plâtre est transféré vers le silo de stockage.

Les refus de ces dernières étapes, comportant notamment des agglomérats de fibres, de laine minérale, etc., peuvent être soumis à une étape supplémentaire dans des tamis 25, 26, typiquement à maille de 8 et 4 mm, les dimensions de ces mailles permettant de retenir lesdits agglomérats de fibres, et de laisse passer le gypse de granulométrie fine qui est encore susceptible d'être présent dans ces agglomérats.

Les différentes fractions granulométriques du gypse extrait lors des différentes étapes de séparation et purification sont stockées dans un silo sous forme d'un composite de grains de plâtre de différentes granulométries, qui représentait, lors des essais, environ 83 % en masse des déchets de l'échantillon de départ, le taux de récupération de plâtre atteignant plus de 97 % du plâtre total contenu dans ces déchets.

Des essais effectués par les inventeurs ont montré que le gypse obtenu grâce au procédé selon l'invention a un degré de pureté supérieur à 98 % et a typiquement la répartition granulométrique suivante :
- 0 - 1 mm : 47,1 %
- 1 - 2 mm : 9,6 %
- 2 - 4 mm : 18,5 %
- 4 - 8 mm : 21,6 %
- 8 - 16 mm : 3,2 %

Le plâtre ou gypse ainsi récupéré a une pureté suffisante pour être recyclé par les fabricants de panneaux de plâtre. Accessoirement, il peut être utilisé par les cimentiers lors de la fabrication du ciment, ou pour amender les terres dans une utilisation agricole.

Les autres composants récupérés, tels que papier, polystyrène expansé, laines minérales, peuvent être aussi recyclés par leurs filières de recyclage spécifique. Ils peuvent aussi être transformés en combustibles de substitution, notamment incinérés en cimenterie.

## Revendications

1. Procédé de recyclage de déchets de plâtre (1), comprenant notamment des déchets de plaques de plâtre cartonnées, avec ou sans complexe isolant, associés à d'autres déchets tels que métaux, bois, céramiques, gaines et câbles électriques, etc.
**caractérisé en ce qu'**il comporte plusieurs étapes de fragmentation et libération, au cours desquelles les déchets sont progressivement déstructurés pour notamment désolidariser le plâtre (102) des feuilles de cartons (101) et éventuellement autres matériaux adhérent au plâtre, et plusieurs étapes de séparation et purification dans lesquelles les composants désolidarisés sont séparés les uns des autres par des cribles passant des granulométrie de plus en plus fines, les étapes de fragmentation et libération comportant notamment une première et une deuxième étape de broyage, la première étape de broyage soumettant les déchets à un écrasement contrôlé simultané à des flexions en faisant passer les déchets dans un broyeur à cylindres dentés (13) comportant deux cylindres dentés (131) comprenant une succession axiale de gorges (133) et de nervures (132) annulaires, les nervures annulaires d'un cylindre étant en correspondance avec les gorges de l'autre cylindre, et l'écartement entre les cylindres dentés étant déterminé de manière que les déchets issus de cette étape de broyage se présentent sous forme d'éléments aplatis d'épaisseur prédéterminée pour passer entre des cylindres d'un deuxième broyeur à cylindres (15) lors de la deuxième étape de broyage.

2. Procédé de recyclage de déchets de plâtre selon la revendication 1, **caractérisé en ce que** le deuxième broyeur à cylindres est un broyeur à cylindres cannelés (15), dont les cylindres cannelés comportent des cannelures et rainures sensiblement parallèles à l'axe de rotation et réparties circonférentiellement, et sont agencés de manière que les déchets entrant issus du premier broyage, suivi ou non d'un premier criblage, soient soumis notamment à des chocs générés par les cannelures simultanément à des flexions et compressions propres à libérer le plâtre des autres composants.

3. Procédé de recyclage de déchets de plâtre selon la revendication 1 ou 2, **caractérisé en ce que** les broyeurs à cylindres comportent un système de décolmatage automatique.

4. Procédé de recyclage de déchets de plâtre selon la revendication 1, **caractérisé en ce qu'**il comporte entre les deux étapes de broyage, une première étape de séparation par criblage par un crible à barreaux (14) agencé pour extraire des déchets issus du premier broyeur à cylindres des déchets de grande dimension.

5. Procédé de recyclage de déchets de plâtre selon la revendication 1, **caractérisé en ce qu'**il comprend au moins deux étapes de séparation magnétique, respectivement en amont du premier broyeur, et en aval du second broyeur.

6. Procédé de recyclage de déchets de plâtre selon la revendication 1, **caractérisé en ce que** le premier broyeur est alimenté à partir d'une trémie de stockage (10), alimentée par un chargeur à godet cribleur, la trémie étant agencée de manière que son système d'extraction assure un débit constant à l'entrée du premier broyeur (13).

7. Procédé de recyclage de déchets de plâtre selon la revendication 1, **caractérisé en ce que** les étapes de séparation et purification comprennent successivement, après la deuxième étape de broyage :
- une ou plusieurs étapes de séparation par cribles vibrant à barreaux, et /ou
- une ou plusieurs étapes de séparation par cribles vibrant à tôle perforée, et/ou
- une ou plusieurs étapes de séparation par cribles vibrant à mailles carrées.

8. Procédé de recyclage de déchets de plâtre selon la revendication 1, **caractérisé en ce que** une ou plusieurs des étapes de séparation sont associées à une étape d'aspiration pour séparer les éléments les plus légers des éléments plus lourds.

9. Procédé de recyclage de déchets de plâtre selon la revendication 1, **caractérisé en ce qu'**il comporte une étape finale de séparation par un tamis rotatif vibrant.

10. Installation de recyclage de déchets de plâtre, comprenant notamment des déchets de plaques de plâtre cartonnées, avec ou sans complexe isolant, associés à d'autres déchets, **caractérisée en ce qu'**elle comporte
- un premier broyeur à cylindres dentés (13) comportant deux cylindres dentés (131) comprenant une succession axiale de gorges (133) et de nervures (132) annulaires, les nervures annulaires d'un cylindre étant en correspondance avec les gorges de l'autre cylindre, et l'écartement entre les cylindres dentés étant ajustable,
- un deuxième broyeur à cylindres cannelés (15), dont les cylindres cannelés comportent des cannelures et rainures sensiblement parallèles à l'axe de rotation et réparties circonférentiellement.

11. Installation de recyclage de déchets de plâtre selon la revendication 10, **caractérisée en ce qu'**elle comporte
- des systèmes de décolmatage automatique équipant les broyeurs (13, 15),
- un crible à barreaux (14) situé entre les deux broyeurs (13, 15),
- des séparateurs magnétiques situés notamment en amont du premier broyeur et en aval du deuxième broyeur
- un ensemble de cribles passant des granulométrie de plus en plus petites, et comportant successivement, en aval du deuxième broyeur, un crible à barreaux vibrant, un crible vibrant à tôle perforée, un second crible vibrant à tôle perforée associé à un système de séparation par aspiration, un crible vibrant à mailles carrées, également associé à un système d'aspiration, un tamis rotatif vibrant.

## Patentansprüche

1. Verfahren zum Recycling von Gipsabfällen (1), welche insbesondere Gipskartonplattenabfälle umfassen, Isolierverbundmaterial enthalten oder nicht, und mit anderen Abfällen wie Metallen, Holz, Keramiken, Kabeln und Kabelführungsrohre usw. verbunden sind,
**dadurch gekennzeichnet, dass** es mehrere Zerstückelungs- und Freisetzungsschritte umfasst, bei denen die Abfälle nach und nach aufgebrochen werden, um insbesondere den Gips (102) von den Kartonbögen (101) und eventuell andere am Gips haftende Stoffe zu lösen, und mehrere Trenn- und Reinigungsschritte aufweist, bei denen die abgelösten Komponenten mittels Siebmaschinen für immer feinere Körngrößen voneinander getrennt werden, wobei die Zerstückelungs- und Freisetzungsschritte insbesondere einen ersten und einen zweiten Zerkleinerungsschritt umfassen, wobei die Abfälle im ersten Zerkleinerungsschritt kontrolliert zerquetscht und gleichzeitig Biegungen ausgesetzt werden, indem die Abfälle durch einen Zahnwalzenbrecher (13) geleitet werden, der zwei Zahnwalzen (131) mit axial aufeinanderfolgenden ringförmigen Rillen (133) und Rippen (132) aufweist, wobei die ringförmigen Rippen der einen Walze mit den Rillen der anderen Walze korrespondieren und der Abstand zwischen den Zahnwalzen so festgelegt wird, dass die Abfälle aus diesem Zerkleinerungsschritt in Form von flachgedrückten Teilen vorbestimmter Dicke vorliegen, die im zweiten Zerkleinerungsschritt durch die Walzen eines zweiten Walzenbrechers (15) hindurchlaufen.

2. Verfahren zum Recycling von Gipsabfällen nach Anspruch 1,
**dadurch gekennzeichnet, dass** der zweite Walzenbrecher ein Riffelwalzenbrecher (15) ist, dessen Riffelwalzen im Wesentlichen drehachsparallele, über den Umfang verteilte Riffelungen und Nuten aufweisen und so angeordnet sind, dass die eintretenden Abfälle aus dem ersten Zerkleinerungsschritt, an den sich eine erste Siebung anschließt oder nicht, insbesondere Stößen, die durch die Riffelungen erzeugt werden, und gleichzeitig Biegungen und Kompressionen ausgesetzt werden, die geeignet sind, den Gips von den anderen Komponenten zu befreien.

3. Verfahren zum Recycling von Gipsabfällen nach Anspruch 1 oder 2, **dadurch gekennzeichnet, dass** die Walzenbrecher ein automatisches Abreinigungssystem aufweisen.

4. Verfahren zum Recycling von Gipsabfällen nach Anspruch 1, **dadurch gekennzeichnet, dass** es zwischen den beiden Zerkleinerungsschritten einen ersten Trennschritt durch Sieben mit einem Stangensieb (14) aufweist, welches dazu ausgebildet ist, größere Abfallstücke aus den Abfällen aus dem ersten Walzenbrecher zu entfernen.

5. Verfahren zum Recycling von Gipsabfällen nach Anspruch 1, **dadurch gekennzeichnet, dass** es mindestens zwei magnetische Trennschritte umfasst, die dem ersten Walzenbrecher vorgelagert bzw. dem zweiten Walzenbrecher nachgelagert sind.

6. Verfahren zum Recycling von Gipsabfällen nach Anspruch 1, **dadurch gekennzeichnet, dass** der erste Walzenbrecher aus einem Vorratsbunker (10) gespeist wird, welcher seinerseits von einem Siebschaufellader gespeist wird, wobei der Bunker so angeordnet ist, dass sein Austragsystem einen konstanten Durchsatz am Eingang des ersten Walzenbrechers (13) sicherstellt.

7. Verfahren zum Recycling von Gipsabfällen nach Anspruch 1, **dadurch gekennzeichnet, dass** die Trenn- und Reinigungsschritte nach dem zweiten Zerkleinerungsschritt nacheinander umfassen:
- einen oder mehrere Trennschritte mittels vibrierender Stangensiebe, und/oder
- einen oder mehrere Trennschritte mittels vibrierender Lochblechsiebe, und/oder
- einen oder mehrere Trennschritte mittels vibrierender Quadratmaschensiebe.

8. Verfahren zum Recycling von Gipsabfällen nach Anspruch 1, **dadurch gekennzeichnet, dass** einer oder mehrere der Trennschritte mit einem Absaugschritt verknüpft sind, um die leichteren Teile von den schwereren Teilen zu trennen.

9. Verfahren zum Recycling von Gipsabfällen nach Anspruch 1, **dadurch gekennzeichnet, dass** es einen abschließenden Trennschritt mittels eines vibrierenden Drehsiebs aufweist.

10. Anlage zum Recycling von Gipsabfällen, welche insbesondere Gipskartonplattenabfälle umfassen, Isolierverbundmaterial enthalten oder nicht, und mit anderen Abfällen verbunden sind, **dadurch gekennzeichnet, dass** sie aufweist:
- einen ersten Walzenbrecher (13), der zwei Zahnwalzen (131) mit axial aufeinanderfolgenden ringförmigen Rillen (133) und Rippen (132) aufweist, wobei die ringförmigen Rippen der einen Walze mit den Rillen der anderen Walze korrespondieren und der Abstand zwischen den Zahnwalzen einstellbar ist,
- einen zweiten Walzenbrecher (15) mit Riffelwalzen, welche Riffelwalzen im Wesentlichen drehachsparallele, über den Umfang verteilte Riffelungen und Nuten aufweisen.

11. Anlage zum Recycling von Gipsabfällen nach Anspruch 10, **dadurch gekennzeichnet, dass** sie aufweist:
- automatische Abreinigungssysteme an den beiden Walzenbrechern (13, 15),
- ein Stangensieb (15) zwischen den beiden Walzenbrechern (13, 15),
- magnetische Trennvorrichtungen, die insbesondere dem ersten Walzenbrecher vorgelagert und dem zweiten Walzenbrecher nachgelagert sind,
- eine Reihe von Sieben für immer feinere Korngrößen, die dem zweiten Walzenbrecher nachgelagert sind und nacheinander ein vibrierendes Stangensieb, ein vibrierendes Lochblechsieb, ein zweites vibrierendes Lochblechsieb in Verbindung mit einem Saug-Trennsystem, ein vibrierendes Quadratmaschensieb, ebenfalls in Verbindung mit einem Saugsystem, ein vibrierendes Drehsieb umfassen.

## Claims

1. A method of recycling plaster waste (1), comprising in particular plasterboard waste, with or without insulation complex, associated with other waste such as metals, wood, ceramics, electrical cables and conduits, etc.,
**characterised in that** it comprises a plurality of fragmentation and loosening stages, during which the waste is progressively broken down, so as in particular to detach the plaster (102) from the paperboard sheets (101) and any other materials adhering to the plaster, and a plurality of separation and cleaning stages in which the detached components are separated from one another by screens progressing through increasingly fine particle sizes, the fragmentation and loosening stages comprising in particular a first and a second grinding stage, the first grinding stage subjecting the waste to simultaneous controlled crushing and bending by passing the waste through a toothed-roll mill (13) comprising two toothed rolls (131) comprising an axial succession of annular grooves (133) and ribs (132), the annular ribs of one roll matching the grooves of the other roll, and the spacing between the toothed rolls being determined such that the waste arising from this grinding stage takes the form of flattened elements of a thickness designed to fit between the rolls of a second roll mill (15) during the second grinding stage.

2. A method for recycling plaster waste according to claim 1, **characterised in that** the second roll mill is a corrugated roll mill (15), the corrugated rolls of which comprise corrugations and grooves substantially parallel to the axis of rotation and distributed circumferentially and are arranged such that the incoming waste from the first grinding, followed or not by first screening, is subjected in particular to impacts produced by the corrugations at the same time as bending and compression capable of loosening the plaster from the other components.

3. A method for recycling plaster waste according to claim 1 or claim 2, **characterised in that** the roll mills comprise an automatic cleaning system.

4. A method for recycling plaster waste according to claim 1, **characterised in that** it comprises, between the two grinding stages, a first stage involving separation by screening using a bar screen (14) intended to extract large-size waste from the waste coming from the first roll mill.

5. A method for recycling plaster waste according to claim 1, **characterised in that** it comprises at least two magnetic separation stages, respectively upstream of the first mill and downstream of the second mill.

6. A method for recycling plaster waste according to claim 1, **characterised in that** the first mill is supplied by a storage hopper (10), itself supplied by a screening multiple-bucket loader, said hopper being arranged such that its extraction system ensures a constant flow rate to the inlet of the first mill (13).

7. A method for recycling plaster waste according to claim 1, **characterised in that** the separation and cleaning stages successively comprise, after the second grinding stage:
- one or more separation stages using vibrating bar screens, and/or
- one or more separation stages using vibrating perforated sheet screens, and/or
- one or more separation stages using vibrating square mesh screens.

8. A method for recycling plaster waste according to claim 1, **characterised in that** one or more of the separation stages are associated with a suction stage for separating the lightest elements from the heavier elements.

9. A method for recycling plaster waste according to claim 1, **characterised in that** it comprises a final separation stage using a vibrating rotary screen.

10. A facility for recycling plaster waste, comprising in particular plasterboard waste, with or without insulation complex, associated with other waste, **characterised in that** it comprises
- a first toothed-roll mill (13) comprising two toothed rolls (131) comprising an axial succession of annular grooves (133) and ribs (132), the annular ribs of one roll matching the grooves of the other roll, and the spacing between the toothed rolls being adjustable,
- a second corrugated roll mill (15), the corrugated rolls of which comprise corrugations and grooves substantially parallel to the axis of rotation and distributed circumferentially.

11. A facility for recycling plaster waste according to claim 10, **characterised in that** it comprises
- automatic cleaning systems associated with the mills (13, 15),
- a bar screen (14) situated between the two mills (13, 15), magnetic separators situated in particular upstream of the first mill and downstream of the second mill,
- an assembly of screens progressing through increasingly small particle sizes, and comprising in succession, downstream of the second mill, a vibrating bar screen, a vibrating perforated sheet screen, a second vibrating perforated sheet screen associated with a suction separation system, a vibrating square mesh screen, also associated with a suction system and a vibrating rotary screen.
